Europäisches Patentamt

European Patent Office

Office européen des brevets

(19)

(11) Numéro de publication : **0 115 719**
**B1**

(12)

# FASCICULE DE BREVET EUROPÉEN

(45) Date de publication du fascicule du brevet :
26.03.86

(51) Int. Cl.⁴ : **C 01 B 17/90**

(21) Numéro de dépôt : **83402402.8**

(22) Date de dépôt : **13.12.83**

(54) Procédé de purification de l'acide sulfurique sous-produit de la synthèse du trifluorure de bore.

(30) Priorité : **17.12.82 FR 8221203**

(43) Date de publication de la demande :
**15.08.84 Bulletin 84/33**

(45) Mention de la délivrance du brevet :
**26.03.86 Bulletin 86/13**

(84) Etats contractants désignés :
**AT BE CH DE FR GB IT LI NL SE**

(56) Documents cités :
**BE-A- 717 019**
**DE-A- 2 027 389**
**FR-A- 2 299 267**
**GB-A- 2 050 328**

(73) Titulaire : **ATOCHEM**
**12/16, allée des Vosges**
**F-92400 Courbevoie (FR)**

(72) Inventeur : **Laviron, Charles**
**27 A, rue Soeur Bouvier**
**F-69004 Lyon (FR)**
Inventeur : **Lecouls, Henri**
**7, avenue Beauregard**
**F-69230 Saint Genis Laval (FR)**
Inventeur : **Mesaros, Louis**
**Avenue d'Auvergne La Querencia**
**F-13310 Saint Martin de Crau (FR)**

(74) Mandataire : **Leboulenger, Jean et al**
**Société ATOCHEM Service Propriété Industrielle**
**Tour Manhattan**
**F-92091 Paris La Défense 2 Cédex 22 (FR)**

Jouve, 18, rue St-Denis, 75001 Paris, France

## Description

La présente invention se rapporte à un procédé de purification d'acide sulfurique contenant du bore. Plus précisément, l'invention concerne un procédé de purification de l'acide sulfurique sous-produit de la synthèse du trifluorure de bore.

Il est connu que le trifluorure de bore anhydre est obtenu par réaction d'acide fluorhydrique sensiblement anhydre sur l'un des acides ortho, tétra ou métaborique ou sur de l'anhydride borique, dans de l'acide sulfurique en présence d'anhydride sulfurique introduit tel quel ou sous forme d'oléum, de façon à maintenir le milieu sensiblement anhydre pour obtenir du trifluorure de bore anhydre. L'utilisation d'anhydride sulfurique pour déshydrater le milieu conduit à la formation d'acide sulfurique sous-produit qui doit être purgé. Cet acide, légèrement pollué par des composés du fluor et du bore, ne peut être utilisé directement.

Diverses méthodes ont été proposées pour purifier l'acide sulfurique sous-produit de la synthèse du trifluorure de bore. Dans la DT-OS 20 27 389 on procède à un entraînement par un gaz inerte conduisant à un acide sulfurique contenant encore de 0,03 à 0,07 % de bore. De même, dans le GB-A-2 050 328, l'acide sulfurique traité contient encore de 0,015 à 0,1 % de bore, bien que les conditions y soient telles (rapport atomique F/B ⩾ 3) que l'élimination du bore devrait être favorisée.

Aucune des méthodes de l'art antérieur ne s'étant avérée satisfaisante, la demanderesse a mis au point un procédé de purification de l'acide sulfurique sous-produit de la synthèse du trifluorure de bore permettant d'obtenir une qualité quasiment équivalente à celle de l'acide sulfurique obtenu par oxydation du soufre, c'est-à-dire un acide sulfurique contenant moins de 0,003 % de fluor et moins de 0,005 % de bore.

S'il est connu que pour éliminer le bore contenu dans l'acide sulfurique, il est nécessaire qu'il soit à l'état de trifluorure de bore — c'est-à-dire que le rapport atomique F/B soit supérieur à 3 (car lorsque l'on ne respecte pas cette condition le bore reste en partie à l'état d'acide difluodihydroxoborique qui ne peut être éliminé du milieu par entraînement), cette condition est, comme cela ressort notamment du FR-A 2 050 328 précité, insuffisante pour obtenir un acide sulfurique ayant la pureté souhaitée.

La demanderesse a découvert que l'on pouvait obtenir de l'acide sulfurique sous-produit de la synthèse du trifluorure de bore contenant moins de 0,003 % de fluor et moins de 0,005 % de bore en diluant l'acide anhydre sous-produit par de l'eau. Selon l'invention, on introduit entre 1 et 10 %, de préférence entre 2 et 6 % en poids d'eau par rapport à l'acide traité. On soumet alors l'acide à un entraînement par un gaz inerte tel l'air, l'azote, le dioxyde de carbone, l'hydrogène etc. La température est maintenue à une valeur supérieure à 90 °C. La température maximale ne peut pas être fixée de façon précise car elle dépend de la tenue des matériaux utilisés. On peut travailler à des températures de 160 ou 170 °C mais on préfère utiliser des températures comprises entre 100 et 120 °C.

Ainsi que cela a été mentionné plus haut, il est nécessaire, dans le procédé, de maintenir le rapport atomique F/B à une valeur supérieure ou égale à 3. Si, exceptionnellement, un déréglage de fabrication se produisait, il y aurait lieu de rectifier ce rapport pour l'amener à une valeur appropriée.

Le procédé de la présente invention peut être mis en œuvre dans toute installation appropriée pour effectuer un entraînement de constituant volatil par un gaz. Les gaz chargés en acide fluorhydrique et en trifluorure de bore sont lavés et purifiés par des moyens connus : lavage à la soude, lavage par un mélange acide sulfurique-acide borique etc. Ils sont ainsi débarrassés du fluor et du bore et peuvent être recyclés ou rejetés.

L'installation de purification proprement dite peut par exemple — mais l'invention ne doit pas être limitée à cette disposition — comprendre un mélangeur eau-acide sulfurique, une capacité (réacteur) surmontée d'une colonne.

Cette capacité contient un diffuseur de gaz et est munie d'un trop plein d'écoulement. La tête de colonne est munie d'une sortie de gaz vers les systèmes de lavage et l'alimentation en acide sulfurique à traiter après mélange avec l'eau. La température du système est maintenue par des chauffages sur la colonne et le réacteur. L'acide peut être préchauffé ou non (l'introduction d'eau provoque aussi un préchauffage de l'acide).

L'invention sera à présent illustrée par les exemples non limitatifs suivants dans lesquels on a utilisé une colonne ayant 4 plateaux théoriques (ce nombre de plateaux peut être modifié et par voie de conséquence le débit de gaz d'entraînement. Aussi, les débits ne sont-ils donnés qu'à titre indicatif.)

Les pourcentages indiqués sont en poids.

## Exemple 1

En utilisant un appareil constitué par une capacité de volume 50 cm³ surmontée d'une colonne garnie de 50 cm de haut et de 2 cm de diamètre, on introduit au-dessus du garnissage 110 g/h d'un mélange : acide sulfurique 104 g/h, eau 6 g/h. La composition de l'acide initial est :

| | |
|---|---|
| — acidité totale exprimée en $H_2SO_4$ | 102,8 % |
| — fluor | 1,31 % |
| — bore | 0,13 % |

2

Le mélange est préchauffé à 100 °C. En pied dans la capacité chauffée à 150 °C on introduit 60 l/h (TNP) d'air. On soutire un acide titrant :

— Acidité totale en $H_2SO_4$     99,7 %
— fluor < 0,003 %
— bore < 0,005 %.

A titre de comparaison le même acide traité dans les mêmes conditions, mais sans introduction d'eau conduit à un acide traité contenant 0,3 % de fluor et 0,03 % de bore.

Exemple 2

Dans le même appareil que pour l'exemple 1 on introduit 108 g/h d'un mélange constitué par 103 g/h d'acide sulfurique à traiter et 5 g/h d'eau. L'acide à traiter contient :

— acidité totale exprimée en $H_2SO_4$     101    %
— fluor     1,28 %
— bore     0,12 %

En pied dans la capacité on injecte 60 l/h (TNP) d'air. La température de la capacité est 130 °C. On recueille un acide sulfurique traité titrant :

— acidité totale en $H_2SO_4$     95,8 %
— fluor < 0,003 %.
— bore < 0,005 %.

Exemple 3

Dans le même appareil que pour les exemples 1 et 2 on introduit 190 g/h d'un mélange constitué par 181 g/h d'acide sulfurique à traiter et 9 g/h d'eau et préchauffé à 100 °C. L'acide à traiter contient :

— fluor     1,28 %
— bore     0,12 %.

Dans la capacité maintenue à 110 °C on injecte 60 l/h (TNP) d'air. L'acide ainsi traité titre :

— fluor < 0,003 %
— bore < 0,005 %.

A titre de comparaison, le même acide traité dans les mêmes conditions sans addition d'eau titre :

— fluor 0,9 %
— bore 0,1 %.

**Revendications**

1. Procédé de purification de l'acide sulfurique sous-produit de la synthèse du trifluorure de bore par entraînement à l'aide d'un gaz inerte de l'acide anhydre sous-produit, en maintenant le rapport atomique F/B à une valeur supérieure ou égale à 3, caractérisé en ce que ledit acide sulfurique anhydre est dilué, avant entraînement, par de l'eau en proportion de 1 à 10 % en poids d'eau par rapport à l'acide traité, la température étant maintenue à une valeur supérieure à 90 °C.

2. Procédé selon la revendication 1 dans lequel on dilue ledit acide sulfurique anhydre par de l'eau en proportion de 2 à 6 % en poids d'eau par rapport à l'acide traité.

3. Procédé selon l'une des revendications 1 et 2 dans lequel on travaille à une température comprise entre 100 et 120 °C.

4. Procédé selon l'une des revendications 1 à 3 dans lequel ledit gaz inerte est choisi parmi l'air, l'azote, le dioxyde de carbone et l'hydrogène.

**Claims**

1. Process for the purification of the sulphuric acid byproduct of the synthesis of boron trifluoride by purging the anhydrous acid byproduct with an inert gas, while maintaining the atomic ratio F/B at a value greater than or equal to 3, characterised in that the said anhydrous sulphuric acid is diluted, before

**0 115 719**

purging, with water in a proportion of 1 to 10 % by weight of water relative to the acid treated, the temperature being kept at a value above 90 °C.

2. Process according to Claim 1, in which the said anhydrous sulphuric acid is diluted with water in a proportion of 2 to 6 % by weight of water relative to the acid treated.

3. Process according to one of Claims 1 and 2, in which a temperature of between 100 and 120 °C is employed.

4. Process according to one of Claims 1 to 3, in which the said inert gas is chosen from among air, nitrogen, carbon dioxide and hydrogen.

**Patentansprüche**

1. Verfahren zur Reinigung der als Nebenprodukt bei der Bortrifluorid-Synthese erhaltenen Schwefelsäure durch eine Mitschleppbehandlung des wasserfreien Säure-Beiprodukts mit einem inerten Gas, wobei das Atomverhältnis F/B auf einem Wert größer oder gleich 3 gehalten wird, dadurch gekennzeichnet, daß die wasserfreie Schwefelsäure vor der Behandlung mit einem Wasseranteil von 1 bis 10 Gew.% Wasser, bezogen auf die behandelte Säure, verdünnt wird, wobei die Temperatur oberhalb 90 °C gehalten wird.

2. Verfahren nach Anspruch 1, bei dem man die wasserfreie Schwefelsäure mit einem Wasseranteil von 2 bis 6 Gew.%, bezogen auf die behandelte Säure, verdünnt.

3. Verfahren nach Anspruch 1 oder 2, bei dem man bei einer Temperatur zwischen 100 und 120 °C arbeitet.

4. Verfahren nach einem der Ansprüche 1 bis 3, bei dem das inerte Gas ausgewählt wird unter Luft, Stickstoff, Kohlendioxid und Wasserstoff.

4